# EUROPÄISCHE PATENTSCHRIFT

(11) **EP 3 371 016 B1**
(45) Veröffentlichungstag und Bekanntmachung des Hinweises auf die Patenterteilung: **08.07.2020**
(21) Anmeldenummer: 16788016.0
(22) Anmeldetag: 05.10.2016
(51) Int. Cl.: B60T 8/36, B60T 13/68

(54) **HYDRAULISCHE BREMSANLAGE**
HYDRAULIC BRAKING SYSTEM
SYSTÈME DE FREINAGE HYDRAULIQUE

(30) Priorität: 04.11.2015 DE 102015014205
(43) Veröffentlichungstag der Anmeldung: 12.09.2018
(73) Patentinhaber: WABCO GmbH, 30453 Hannover (DE)
(72) Erfinder: HEINRICH, Volker, 31171 Nordstemmen (DE)
(74) Vertreter: Krause, Martin
(86) Internationale Anmeldenummer: PCT/EP2016/001650
(87) Internationale Veröffentlichungsnummer: WO 2017/076483

(56) Entgegenhaltungen:
- EP-A2- 2 256 011
- DE-A1- 1 555 615
- DE-A1- 3 240 277
- DE-A1- 19 744 389

## Beschreibung

Die Erfindung betrifft eine fremdkraftgestützte hydraulische Bremsanlage eines Radfahrzeugs, mit einer Hauptbremsleitung, in die mittels eines über ein Bremspedal betätigbaren Bremsventils ein Soll-Bremsdruck einsteuerbar ist, und von der mehrere jeweils zu einer Betätigungseinheit einer Radbremse führende Radbremsleitungen abzweigen, sowie mit einer Ventilanordnung einer ABS-Steuerung, die jeweils ein zwischen der Hauptbremsleitung und einer der Radbremsleitungen angeordnetes Einlassventil sowie ein zwischen der betreffenden Radbremsleitung und einer drucklosen Rücklaufleitung angeordnetes Auslassventil aufweist.

Während Personenkraftwagen sowie leichte Nutzfahrzeuge üblicherweise eine pedalkraftgestützte hydraulische Bremsanlage und schwerere Nutzfahrzeuge eine fremdkraftgestützte pneumatische Bremsanlage aufweisen, können Radfahrzeuge, die, wie Baumaschinen und Ackerschlepper, für einen Off-Highway-Einsatz vorgesehen sind, mit einer fremdkraftgestützten hydraulischen Bremsanlage ausgerüstet sein. Aufgrund der erforderlichen hohen Bremskräfte weisen die Betätigungseinheiten der Radbremsen, wie Radbremszylinder und Bremssättel, bei derartigen Radfahrzeugen ein relativ großes Verdrängungsvolumen auf, das nur mit einer fremdkraftgestützten Bremsanlage gefördert werden kann. Da Baumaschinen und Ackerschlepper üblicherweise über hydraulische Arbeitsgeräte verfügen oder sogar einen hydrostatischen Antrieb aufweisen, kann eine fremdkraftgestützte hydraulische Bremsanlage vorteilhaft die ohnehin vorhandene hydraulische Druckversorgungseinrichtung nutzen.

Beispielsweise ist aus der DE 19744389 A1 eine pneumatische und hydraulische Bremsanlage bekannt.

Vorliegend wird von einer fremdkraftgestützten hydraulischen Bremsanlage eines Radfahrzeugs ausgegangen, die eine Hauptbremsleitung und mehrere von der Hauptbremsleitung abzweigende sowie jeweils zu einer Betätigungseinheit einer Radbremse führende Radbremsleitungen und eine Ventilanordnung einer ABS-Steuerung aufweist. In die Hauptbremsleitung ist mittels eines Bremsventils, das von einem Fahrer über ein Bremspedal betätigbar ist, ein Soll-Bremsdruck einsteuerbar. Bei einer Ausführung der Radbremsen als Trommelbremsen sind die Betätigungseinheiten der Radbremsen üblicherweise als Radbremszylinder ausgebildet, mittels deren Kolben die betreffenden Bremsbacken zum Abbremsen der Fahrzeugräder gegen die drehfest mit den Radnaben verbundenen Bremstrommeln gedrückt werden. Bei einer Ausführung der Radbremsen als Scheibenbremsen handelt es sich bei den Betätigungseinheiten der Radbremsen üblicherweise um Bremssättel, in denen die betreffenden Bremsbeläge zum Abbremsen der Fahrzeugräder mittels Kolben gegen die drehfest mit den Radnaben verbundenen Bremsscheiben gedrückt werden.

Die Ventilanordnung der Antiblockiersystem-Steuerung (ABS-Steuerung) weist jeweils ein zwischen der Hauptbremsleitung und einer der Radbremsleitungen angeordnetes Einlassventil und ein zwischen der betreffenden Radbremsleitung sowie einer drucklosen Rücklaufleitung angeordnetes Auslassventil auf. Im unbetätigten Zustand sind die Einlassventile geöffnet und die Auslassventile geschlossen, so dass der von dem Fahrer vorgegebene Soll-Bremsdruck auch in den Radbremsleitungen und den an diese angeschlossenen Betätigungseinheiten der Radbremsen wirksam ist. Demzufolge wird das betreffende Radfahrzeug dann entsprechend der Betätigung des Bremspedals durch den Fahrer abgebremst. Wenn während eines Bremsvorgangs durch die Auswertung von an den Fahrzeugrädern angeordneten Drehzahlsensoren jedoch ein blockiertes oder kurz vor dem Blockieren stehendes Fahrzeugrad festgestellt wird, wird das Einlassventil der betreffenden Betätigungseinheit geschlossen und das zugeordnete Auslassventil geöffnet, so dass die Radbremse des betreffenden Fahrzeugrades gelöst wird. Wenn dieses Fahrzeugrad wieder mit ausreichend hoher Drehzahl rotiert, wird das Einlassventil dieser Betätigungseinheit erneut geöffnet und das zugeordnete Auslassventil so lange geschlossen, bis an dem betreffenden Fahrzeugrad wieder ein hoher Drehzahlabfall festgestellt wird. Durch ein wechselweises Öffnen sowie Schließen der Einlassventile und der Auslassventile wird somit ein Blockieren der Fahrzeugräder verhindert und dadurch die Brems- und Lenkbarkeit des betreffenden Radfahrzeugs erhalten.

Um bei störungsbedingt gleichzeitig geschlossenen Einlassventilen und Auslassventilen dann, wenn durch ein Zurücklenken des Bremspedals in einer der Radbremsleitungen ein höherer Bremsdruck als in der Hauptbremsleitung eingeschlossen ist, einen Abbau des Bremsdruckes über die Hauptbremsleitung und das Bremsventil zu ermöglichen, sind üblicherweise Sicherheitsventile vorgesehen. Diese Sicherheitsventile können in Form von jeweils parallel zu den Einlassventilen zwischen den Radbremsleitungen und der Hauptbremsleitung angeordneten, in Richtung der Hauptbremsleitung öffnenden Rückschlagventilen oder in Form von in die Einlassventile integrierten Rückschlagventilen oder Notöffnungsfunktionen mit Öffnungsrichtung zur Hauptbremsleitung realisiert sein.

In der DE 195 46 056 A1 und der EP 1 013 528 B1 sind fremdkraftgestützte hydraulische Bremsanlagen eines Kraftfahrzeugs beschrieben, die jeweils zwei Bremskreise, eine Ventilanordnung einer ABS-Steuerung und eine Ventilanordnung einer Antischlupfregelungs-Steuerung (ASR-Steuerung) aufweisen. Die Einlassventile und die Auslassventile der Ventilanordnung der ABS-Steuerung sind dort jeweils als 2/2-Wege-Magnetschaltventile ausgebildet. Während die Sicherheitsventile bei der Ventilanordnung der ABS-Steuerung gemäß der DE 195 46 056 A1 als jeweils parallel zu den Einlassventilen angeordnete Rückschlagventile ausgebildet sind, weist die Ventilanordnung der ABS-Steuerung gemäß der EP 1 013 528 B1 hierzu in die Einlassventile integrierte Rückschlagventile beziehungsweise Rückschlagventilfunktionen auf.

Aufgrund einer Verordnung der Europäischen Union müssen alle Bremsanlagen von landwirtschaftlichen Fahrzeugen, die eine Höchstgeschwindigkeit von 40 km/h erreichen oder überschreiten, spätestens ab 01.01.2020 eine ABS-Steuerung aufweisen. Insbesondere für große und schwere Ackerschlepper mit entsprechend groß dimensionierten Radbremsen sind daher bei einer Ausrüstung mit einer fremdkraftgestützten hydraulischen Bremsanlage Ventilanordnungen der ABS-Steuerung mit hohen Volumendurchsätzen und möglichst hoher ABS-Regelfrequenz erforderlich. Diese Anforderung ist mit als Magnetschaltventile ausgebildeten Einlassventilen und Auslassventilen kaum realisierbar, da entweder die Schaltquerschnitte der Magnetschaltventile hierfür zu klein oder die Schaltdynamik der Magnetschaltventile zu niedrig und deren Stromaufnahme zu hoch ist.

Von der MICO Inc., USA werden für die ABS-Steuerung von schweren Radfahrzeugen für den Off-Highway-Einsatz ABS-Regelventile angeboten, die als 3/3-Wege-Proportional-Magnetventile ausgebildet sind und jeweils die Funktionen eines Einlassventils und eines Auslassventils zusammenfassen. Informationen über diese ABS-Regelventile sind dem Dokument "Electrohydraulic Components" (Form No. 84-950-028) zu entnehmen, das als pdf-Dokument von der Homepage der Fa. MICO Inc. (www.mico.com) aus dem Internet heruntergeladen werden kann. Derartige ABS-Regelventile sind zwar für einen hohen Volumendurchsatz ausgelegt, ermöglichen aber nur eine relativ niedrige ABS-Regelfrequenz.

Aufgrund der zukünftigen Anforderungen an die Bremsanlagen von schweren Radfahrzeugen für den Off-Highway-Einsatz liegt der vorliegenden Erfindung die Aufgabe zugrunde, eine Ventilanordnung einer ABS-Steuerung der eingangs genannten Bauart für eine fremdkraftgestützte hydraulische Bremsanlage eines Radfahrzeugs vorzustellen, die einen hohen Volumendurchsatz mit einer hohen ABS-Regelfrequenz und einen geringen Energieaufwand für die Ansteuerung der ABS-Ventile verbindet.

Diese Aufgabe ist in Verbindung mit den Merkmalen des Oberbegriffs von Anspruch 1 dadurch gelöst, dass das Einlassventil und das Auslassventil als druckgesteuerte 2/2-Wege-Schaltventile mit entsprechend großen Schaltquerschnitten ausgebildet sind, und dass dem Einlassventil und dem Auslassventil jeweils mindestens ein als Magnetschaltventil ausgebildetes Vorsteuerventil zugeordnet ist, über das ein Steueranschluss des betreffenden Einlassventils oder Auslassventils zur Umschaltung wechselweise mit einem niedrigen oder hohen Steuerdruck beaufschlagbar ist.

Die Erfindung geht demnach von einer an sich bekannten fremdkraftgestützten hydraulischen Bremsanlage eines Radfahrzeugs mit einer Hauptbremsleitung und einer Ventilanordnung einer ABS-Steuerung aus. In die Hauptbremsleitung ist mittels eines über ein Bremspedal betätigbaren Bremsventils ein Soll-Bremsdruck einsteuerbar. Von der Hauptbremsleitung zweigen mehrere jeweils zu einer Betätigungseinheit einer Radbremse, wie Radbremszylinder oder Bremssättel, führende Radbremsleitungen ab. Die Ventilanordnung der ABS-Steuerung umfasst jeweils ein zwischen der Hauptbremsleitung und einer der Radbremsleitungen angeordnetes Einlassventil sowie ein zwischen der betreffenden Radbremsleitung und einer drucklosen Rücklaufleitung angeordnetes Auslassventil.

Um den für die Radbremsen schwerer, für den Off-Highway-Einsatz vorgesehener Radfahrzeuge erforderlichen hohen Volumendurchsatz in Verbindung mit einer hohen ABS-Regelfrequenz und einem geringen Energieaufwand für die Ansteuerung der ABS-Ventile zu realisieren, sind gemäß der Erfindung das Einlassventil und das Auslassventil als druckgesteuerte 2/2-Wege-Schaltventile mit entsprechend großen Schaltquerschnitten ausgebildet, die jeweils über mindestens ein als Magnetschaltventil ausgebildetes Vorsteuerventil ansteuerbar sind. Demnach ist ein Steueranschluss des betreffenden Einlassventils oder Auslassventils zur Umschaltung über das zugeordnete Vorsteuerventil beziehungsweise die zugeordneten Vorsteuerventile wechselweise mit einem niedrigen oder hohen Steuerdruck beaufschlagbar. Die als Vorsteuerventile genutzten Magnetventile weisen eine hohe Schaltdynamik und eine geringe Stromaufnahme ihrer Magnetspulen auf, so dass die Ventilanordnung der ABS-Steuerung insgesamt einen hohen Volumendurchsatz mit einer hohen ABS-Regelfrequenz und einem geringen Energieaufwand für die Ansteuerung ihrer ABS-Ventile verbindet.

Bei einer möglichen ersten Bauart der Vorsteuerventile ist vorgesehen, dass dem Einlassventil und/oder dem Auslassventil jeweils zwei als 2/2-Wege-Magnetschaltventile ausgebildete Vorsteuerventile zugeordnet sind, von denen das erste Vorsteuerventil zwischen einer von der Hauptbremsleitung abzweigenden Hochdruckleitung und einer zu dem betreffenden Steueranschluss führenden Steuerdruckleitung angeordnet ist, die im unbestromten Zustand des ersten Vorsteuerventils gegeneinander abgesperrt sowie im bestromten Zustand des ersten Vorsteuerventils miteinander verbunden sind, und von denen das zweite Vorsteuerventil zwischen der Steuerdruckleitung und einer zu der Rücklaufleitung führenden Niederdruckleitung angeordnet ist, die im unbestromten Zustand des zweiten Vorsteuerventils miteinander verbunden und im bestromten Zustand des zweiten Vorsteuerventils gegeneinander abgesperrt sind.

Bei einer möglichen zweiten Bauart der Vorsteuerventile ist vorgesehen, dass dem Einlassventil und/oder dem Auslassventil jeweils ein als 3/2-Wege-Magnetschaltventil ausgebildetes Vorsteuerventil zugeordnet ist, das zwischen einer von der Hauptbremsleitung abzweigenden Hochdruckleitung, einer zu dem betreffenden Steueranschluss führenden Steuerdruckleitung und einer zu der Rücklaufleitung führenden Niederdruckleitung angeordnet ist, wobei die Steuerdruckleitung im unbestromten Zustand des betreffenden Vorsteuerventils mit der Niederdruckleitung verbunden und gegenüber der Hochdruckleitung abgesperrt ist, und wobei die Steuerdruckleitung im bestromten Zustand des betreffenden Vorsteuerventils mit der Hochdruckleitung verbunden und gegenüber der Niederdruckleitung abgesperrt ist.

Bei beiden genannten Bauarten der Vorsteuerventile wird somit der in der Hauptdruckleitung herrschende Bremsdruck als hoher Steuerdruck und der in der Rücklaufleitung herrschende Umgebungsdruck als niedriger Steuerdruck verwendet, die unmittelbar zugänglich sind und über von der Rücklaufleitung und der Hauptbremsleitung abzweigende Steuerdruckleitungen (Niederdruckleitung und Hochdruckleitung) abgegriffen werden können. Üblicherweise werden in einer Ventilanordnung einer ABS-Steuerung gleichartige Magnetventile zur Ansteuerung der Ein- und Auslassventile verwendet, um die Ansteuerung zu vereinfachen und durch die Verwendung von Gleichteilen Kosten einzusparen. Grundsätzlich ist es jedoch auch möglich, in einer Ventilanordnung unterschiedliche Bauarten der Vorsteuerventile zu verwenden, wobei zum Beispiel die Einlassventile über jeweils zwei 2/2-Wege-Magnetschaltventile und die Auslassventile über jeweils ein 3/2-Wege-Magnetschaltventil angesteuert werden.

Hinsichtlich seiner Bauart sind das Einlassventil und das Auslassventil als ein Sitzventil ausgebildet sein, das zumindest einen Anschluss für eine Radbremsleitung, den Steueranschluss für die betreffende Steuerdruckleitung sowie einen Anschluss für die Hauptbremsleitung oder für die Rücklaufleitung aufweist.

Das als Sitzventil ausgebildete Einlassventil weist erfindungsgemäß eine nach radial innen stufenweise verengte Ventilbohrung mit einem innenliegenden Ventilsitz auf, in der ein im Ruhezustand, also bei mit dem niedrigen Steuerdruck beaufschlagten Steueranschluss, von einer Ventilfeder in einer von dem Ventilsitz abgehobenen Stellung gehaltener Sitzkolben sowie axial außen ein mit dem Sitzkolben in Stellverbindung stehender Stellkolben angeordnet sind, wobei in die Ventilbohrung axial innen neben dem Ventilsitz die Hauptbremsleitung radial einmündet, wobei in die Ventilbohrung axial außen neben dem Ventilsitz die Radbremsleitung radial einmündet, und an der Ventilbohrung radial außen der Steueranschluss für die zugeordnete Steuerdruckleitung angeordnet ist.

Durch den genannten Anschluss der Hauptbremsleitung an die Ventilbohrung wird eine auf den Sitzkolben wirksame Stellkraft erzeugt, die der auf den größeren Stellkolben wirksamen Stellkraft entgegengerichtet ist und somit insbesondere vor dem Auftreffen auf den Ventilsitz dämpfend auf die Stellbewegung des Sitzkolbens wirksam ist.

Der Sitzkolben des Einlassventils weist an seinem dem Ventilsitz zugewandten Ende vorzugsweise einen Sitzabschnitt mit reduziertem Durchmesser auf, wodurch der Schaltquerschnitt vergrößert und damit ein erhöhter Volumendurchsatz des Einlassventils erreicht ist.

Das als Sitzventil ausgebildete Auslassventil weist bevorzugt eine beidseitig nach axial innen stufenweise verengte Ventilbohrung mit einem axial innenliegenden Ventilsitz auf, in der axial einseitig ein im Ruhezustand, also bei mit dem niedrigen Steuerdruck beaufschlagten Steueranschluss, von einer Ventilfeder in einer auf dem Ventilsitz aufliegenden Stellung gehaltener Sitzkolben sowie axial gegenüberliegend ein mit dem Sitzkolben in Stellverbindung stehender Stellkolben angeordnet sind, wobei in die Ventilbohrung axial stellkolbenseitig neben dem Ventilsitz die Rücklaufleitung radial einmündet, wobei in die Ventilbohrung axial sitzkolbenseitig neben dem Ventilsitz die Radbremsleitung radial einmündet, und wobei in die Ventilbohrung stellkolbenseitig axial außen der Steueranschluss für die zugeordnete Steuerdruckleitung angeordnet ist.

In einer Weiterbildung dieser Bauart kann das Auslassventil auch als ein kaskadiertes Sitzventil ausgebildet sein, das eine beidseitig nach axial innen stufenweise verengte Ventilbohrung mit einem axial innenliegenden ersten Ventilsitz aufweist, wobei in dieser Ventilbohrung axial einseitig eine von einer ersten Ventilfeder in öffnender Richtung belastete Sitzhülse mit einem zweiten Ventilsitz und dazu axial benachbarte Radialbohrungen angeordnet sind, wobei radial innerhalb der Sitzhülse ein im Ruhezustand von einer zweiten Ventilfeder in einer auf dem zweiten Ventilsitz aufliegenden Stellung gehaltener sowie an der Sitzhülse abgestützter Sitzkolben angeordnet ist, und, axial gegenüberliegend, ein mit dem Sitzkolben in Stellverbindung stehender Stellkolben angeordnet ist, wobei in diese Ventilbohrung axial stellkolbenseitig neben dem ersten Ventilsitz die Rücklaufleitung radial einmündet, wobei in diese Ventilbohrung axial sitzhülsenseitig neben dem ersten Ventilsitz die Radbremsleitung radial einmündet, und an der stellkolbenseitig axial außen der Steueranschluss für die zugeordnete Steuerdruckleitung angeordnet ist. Die Federsteifigkeit der zweiten Ventilfeder ist größer als die Federsteifigkeit der ersten Ventilfeder, so dass die Sitzhülse im unbetätigten Ruhezustand des Auslassventils auf dem ersten Ventilsitz aufliegt. Durch die kaskadierte Ausführung des Sitzventils wird einerseits der Schaltquerschnitt vergrößert und damit ein erhöhter Volumendurchsatz des Auslassventils erreicht, sowie andererseits die Schaltdynamik des Auslassventils erhöht.

Vorzugsweise ist bei den beiden genannten Ausführungsformen des Auslassventils vorgesehen, dass der Sitzkolben des Auslassventils an seinem dem Ventilsitz beziehungsweise dem zweiten Ventilsitz zugewandten Ende einen Sitzabschnitt mit reduziertem Durchmesser aufweist, und dass auf der axial von dem Ventilsitz abgewandten Seite des Sitzkolbens eine von der Radbremsleitung abzweigende Steuerdruckleitung in die Ventilbohrung geführt ist. Durch den reduzierten Durchmesser des Sitzabschnittes wird der Schaltquerschnitt vergrößert und damit ein erhöhter Volumendurchsatz des Auslassventils erreicht. Durch die Zuführung des in der Radbremsleitung herrschenden Bremsdruckes an die äußere Stirnwand des Sitzkolbens wird die sitzseitig auf eine kleinere Ringfläche des Sitzkolbens wirksame Druckkraft überkompensiert, so dass das Auslassventil bei niedrigerem Bremsdruck in der Hauptbremsleitung sicher geschlossen beziehungsweise geschlossen gehalten wird.

In einer nicht beanspruchten Ausführung können alternativ zu der Ausführung als Sitzventil das Einlassventil und/oder das Auslassventil auch als ein Schieberventil ausgebildet sein, das zumindest einen Anschluss für die Radbremsleitung, den Steueranschluss für die betreffende Steuerdruckleitung sowie einen Anschluss für die Hauptbremsleitung oder für die Rücklaufleitung aufweist.

Das als Schieberventil ausgebildete Einlassventil weist bevorzugt eine zylindrische Ventilbohrung auf, in der ein im Ruhezustand von einer Ventilfeder in einer offenen Schaltposition gehaltener Steuerkolben mit einem ringförmigen Steuersteg und einer axial benachbarten ringförmigen Verbindungsnut angeordnet ist, wobei im Bereich des Steuersteges des Steuerkolbens die Hauptbremsleitung radial in die Ventilbohrung einmündet, wobei die Radbremsleitung im Bereich der Verbindungsnut des Steuerkolbens radial in die Ventilbohrung einmündet, und bei dem auf der von der Ventilfeder axial abgewandten Außenseite der Ventilbohrung der Steueranschluss für die zugeordnete Steuerdruckleitung angeordnet ist.

In ähnlicher Weise weist das als Schieberventil ausgebildete Auslassventil bevorzugt eine zylindrische Ventilbohrung auf, in der ein im Ruhezustand von einer Ventilfeder in einer geschlossenen Schaltposition gehaltener Steuerkolben mit einem ringförmigen Steuersteg und einer axial benachbarten ringförmigen Verbindungsnut angeordnet ist, wobei im Bereich des Steuersteges die Rücklaufleitung radial in die Ventilbohrung einmündet, wobei die Radbremsleitung im Bereich der Verbindungsnut radial in die Ventilbohrung einmündet, und bei dem auf der von der Ventilfeder axial abgewandten Außenseite der Steueranschluss für die zugeordnete Steuerdruckleitung angeordnet ist.

Zur Erzeugung einer begrenzten hydraulischen Gegenkraft, die wie die betreffende Ventilfeder entgegen der über den zugeordneten Steueranschluss eingesteuerten Stellkraft auf den jeweiligen Steuerkolben einwirkt, weist die Ventilbohrung des Einlassventils und/oder des Auslassventils eine koaxiale Erweiterungsbohrung mit einem im Vergleich zu der Ventilbohrung verringerten Durchmesser auf, in der ein mit dem Steuerkolben in Kontakt stehender oder in Kontakt bringbarer zylindrischer Stift axialbeweglich geführt ist, und in die endseitig eine von der Hauptbremsleitung abzweigende Steuerdruckleitung geführt ist.

Um bei gelöstem Bremspedal und geschlossenen Ein- und Auslassventilen einen schnellen Druckabbau in der Radbremsleitung zu ermöglichen, ist zweckmäßig parallel zu dem Einlassventil zwischen der Radbremsleitung und der Hauptbremsleitung ein in Richtung zu der Hauptbremsleitung öffnendes Rückschlagventil angeordnet.

Zur Vereinfachung der Montage an dem betreffenden Radfahrzeug sind das Einlassventil, das Auslassventil und die zugeordneten Vorsteuerventile der einer Radbremse zugeordneten Ventilanordnung der ABS-Steuerung in einem Ventilmodul zusammengefasst, das in möglichst geringem Abstand von der betreffenden Radbremse am Fahrzeugrahmen des Radfahrzeugs befestigt wird.

Die Erfindung wird nachstehend anhand von vier in der beigefügten Zeichnung dargestellten Ausführungsbeispielen näher erläutert. In der Zeichnung zeigt
- Fig. 1: eine erfindungsgemäße erste Ventilanordnung einer ABS-Steuerung für eine fremdkraftgestützte hydraulische Bremsanlage eines Radfahrzeugs in einer schematischen Ansicht,
- Fig. 1a: die Ventilanordnung gemäß Fig. 1 mit einer schematischen Schnittdarstellung der betreffenden Ein- und Auslassventile,
- Fig. 1b: die Ventilanordnung gemäß Fig. 1 mit einer schematischen Schnittdarstellung der betreffenden Ein- und Auslassventile und einer modifizierten Ausführung des Auslassventils,
- Fig. 2: eine erfindungsgemäße zweite Ventilanordnung einer ABS-Steuerung für eine fremdkraftgestützte hydraulische Bremsanlage eines Radfahrzeugs in einer schematischen Ansicht,
- Fig. 2a: die Ventilanordnung gemäß Fig. 2 mit einer schematischen Schnittdarstellung der betreffenden Ein- und Auslassventile,
- Fig. 3: eine nicht zur Erfindung gehörende dritte Ventilanordnung einer ABS-Steuerung für eine fremdkraftgestützte hydraulische Bremsanlage eines Radfahrzeugs in einer schematischen Ansicht,
- Fig. 3a: die Ventilanordnung gemäß Fig. 3 mit einer Schnittdarstellung der betreffenden Ein- und Auslassventile,
- Fig. 4: eine nicht zur Erfindung gehörende vierte Ventilanordnung einer ABS-Steuerung für eine fremdkraftgestützte hydraulische Bremsanlage eines Radfahrzeugs in einer schematischen Ansicht, und
- Fig. 4a: die Ventilanordnung gemäß Fig. 4 mit einer schematischen Schnittdarstellung der betreffenden Ein- und Auslassventile.

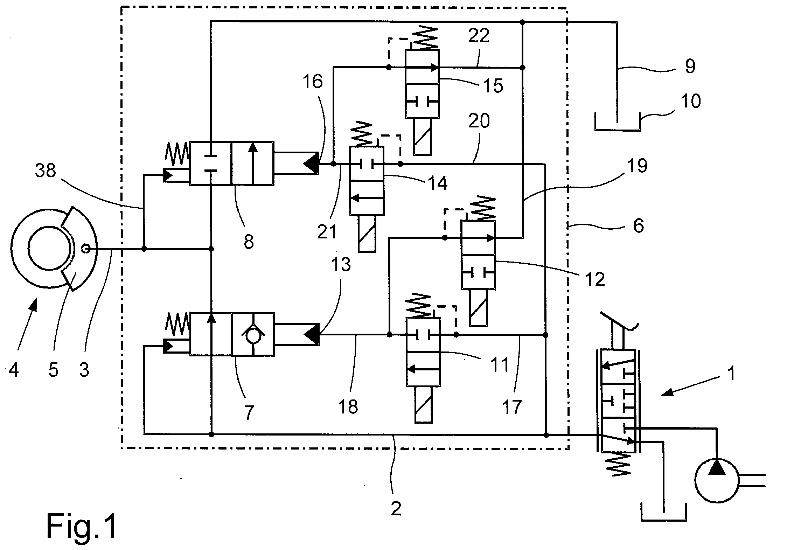

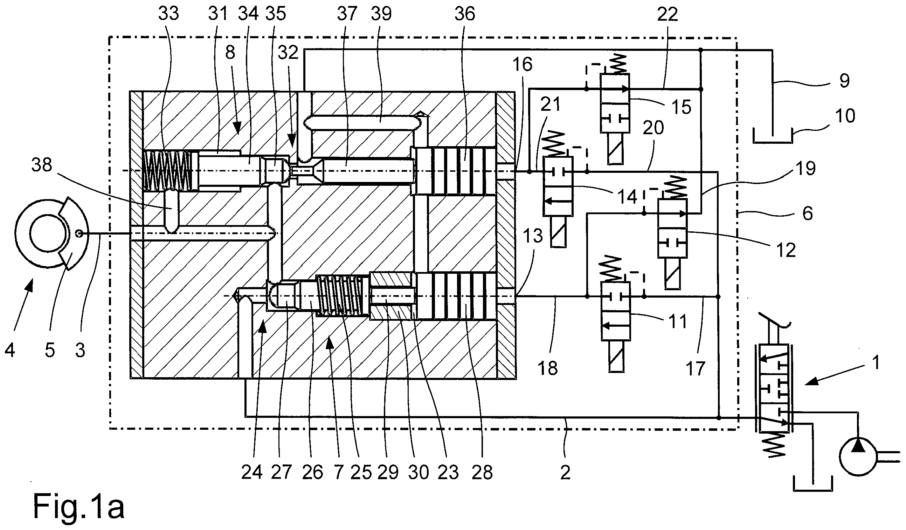

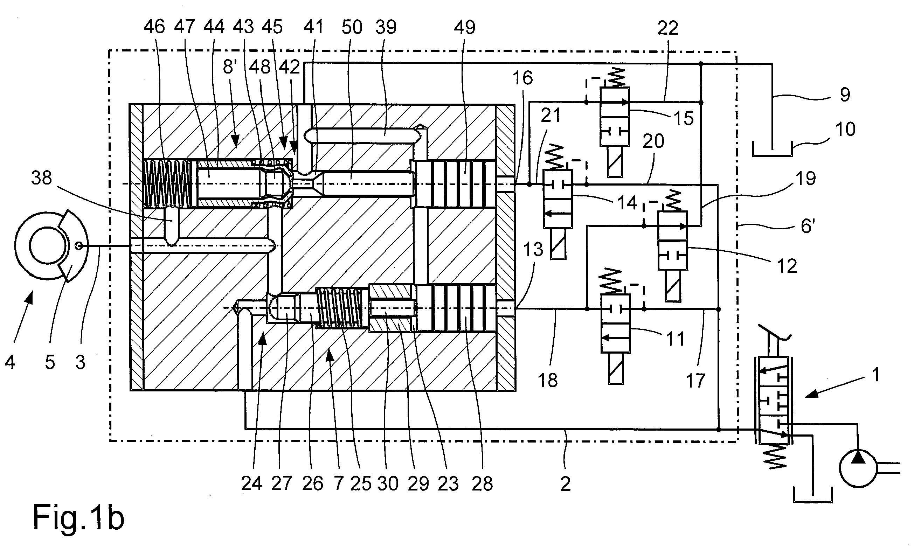

In Fig. 1 ist ein Ausschnitt einer fremdkraftgestützten hydraulischen Bremsanlage eines Radfahrzeugs in rein schematischer Form abgebildet, der die einer einzelnen Radbremse 4 zugeordnete Ventilanordnung 6 einer ABS-Steuerung umfasst. Von einer Hauptbremsleitung 2, in die mittels eines über ein Bremspedal betätigbaren Bremsventils 1 ein Soll-Bremsdruck einsteuerbar ist, zweigt eine zu einer Betätigungseinheit 5 der Radbremse 4 führende Radbremsleitung 3 ab. Vorliegend ist die Radbremse 4 beispielhaft als eine Scheibenbremse ausgeführt, so dass deren Betätigungseinheit 5 durch einen Bremssattel gebildet ist. Die Ventileinheit 6 der ABS-Steuerung umfasst ein zwischen der Hauptbremsleitung 2 und der Radbremsleitung 3 angeordnetes Einlassventil 7 sowie ein zwischen der Radbremsleitung 3 und einer in einen Sammelbehälter 10 für das verwendete Druckmittel führenden drucklosen Rücklaufleitung 9 angeordnetes Auslassventil 8.

Erfindungsgemäß sind das Einlassventil 7 und das Auslassventil 8 als druckgesteuerte 2/2-Wege-Schaltventile mit entsprechend großen Schaltquerschnitten ausgebildet, denen vorliegend jeweils zwei als 2/2-Wege-Magnetschaltventile ausgebildete Vorsteuerventile 11, 12; 14, 15 zugeordnet sind, mittels denen ein Steueranschluss 13; 16 des betreffenden Einlassventils 7 oder Auslassventils 8 zur Umschaltung wechselweise mit einem niedrigen oder hohen Steuerdruck beaufschlagbar ist. Durch diese Ausbildung und Anordnung weisen die Ein- und Auslassventile 7, 8 einen hohen Volumendurchsatz und eine hohe ABS-Regelfrequenz auf. Zudem ist der Energieaufwand zur Ansteuerung der Ein- und Auslassventile 7, 8 über die Vorsteuerventile 11, 12; 14, 15 relativ gering.

Das erste Vorsteuerventil 11 des Einlassventils 7 ist zwischen einer von der Hauptbremsleitung 2 abzweigenden Hochdruckleitung 17 und einer zu dem Steueranschluss 13 des Einlassventils 7 führenden Steuerdruckleitung 18 angeordnet. Im Ruhezustand, also im unbestromten Zustand der Magnetspule des ersten Vorsteuerventils 11, sind die Hochdruckleitung 17 und die Steuerdruckleitung 18 gegeneinander abgesperrt, während diese im Betätigungszustand, also im bestromten Zustand der Magnetspule des ersten Vorsteuerventils 11 miteinander verbunden sind.

Das zweite Vorsteuerventil 12 des Einlassventils 7 ist zwischen der Steuerdruckleitung 18 und einer an die Rücklaufleitung 9 angeschlossenen Niederdruckleitung 19 angeordnet. Im Ruhezustand, also im unbestromten Zustand der Magnetspule des zweiten Vorsteuerventils 12 sind die Steuerdruckleitung 18 und die Niederdruckleitung 19 miteinander verbunden, während diese im Betätigungszustand, also bestromten Zustand der Magnetspule des zweiten Vorsteuerventils 12 gegeneinander abgesperrt sind. Somit wird der Steueranschluss 13 des Einlassventils 7 im unbetätigten Zustand der zugeordneten Vorsteuerventile 11, 12 mit dem niedrigen Steuerdruck beziehungsweise mit Umgebungsdruck beaufschlagt. Demzufolge befindet sich das Einlassventil 7 dann in der abgebildeten Ruhestellung, in der die Radbremsleitung 3 mit der Hauptbremsleitung 2 verbunden ist.

Durch eine Betätigung, also durch das Umschalten der beiden zugeordneten Vorsteuerventile 11, 12 wird die Steuerdruckleitung 18 von der Niederdruckleitung 19 getrennt und über das erste Vorsteuerventil 11 mit der Hochdruckleitung 17 verbunden. Hierdurch wird der Steueranschluss 13 des Einlassventils 7 mit dem in der Hauptbremsleitung 2 herrschenden Bremsdruck beaufschlagt, wodurch das Einlassventil 7 in seine Betätigungsstellung umgeschaltet wird, in der die Radbremsleitung 3 gegenüber der Hauptbremsleitung 2 abgesperrt ist.

Das erste Vorsteuerventil 14 des Auslassventils 8 ist zwischen einer von der Hauptbremsleitung 2 abzweigenden Hochdruckleitung 20 und einer zu dem Steueranschluss 16 des Auslassventils 8 führenden Steuerdruckleitung 21 angeordnet. Im Ruhezustand des ersten Vorsteuerventils 14 sind die Hochdruckleitung 20 und die Steuerdruckleitung 21 gegeneinander abgesperrt und im Betätigungszustand des ersten Vorsteuerventils 14 miteinander verbunden. Das zweite Vorsteuerventil 15 des Auslassventils 8 ist zwischen der Steuerdruckleitung 21 und einer in die Rücklaufleitung 9 führenden Niederdruckleitung 22 angeordnet. Im Ruhezustand des zweiten Vorsteuerventils 15 sind die Steuerdruckleitung 21 und die Niederdruckleitung 22 miteinander verbunden sowie im Betätigungszustand des zweiten Vorsteuerventils 15 gegeneinander abgesperrt. Somit wird der Steueranschluss 16 des Auslassventils 8 im unbetätigten Zustand der zugeordneten Vorsteuerventile 14, 15 mit dem niedrigen Steuerdruck beziehungsweise mit dem Umgebungsdruck beaufschlagt. Demzufolge befindet sich das Auslassventil 8 dann in der abgebildeten Ruhestellung, in der die Radbremsleitung 3 gegenüber der Rücklaufleitung 9 abgesperrt ist.

Durch eine Betätigung, also durch ein Umschalten der beiden dem Auslassventil 8 zugeordneten Vorsteuerventile 14, 15 wird die Steuerdruckleitung 21 von der Niederdruckleitung 22 getrennt und über das erste Vorsteuerventil 14 mit der Hochdruckleitung 20 verbunden. Hierdurch wird der Steueranschluss 16 des Auslassventils 8 mit dem in der Hauptbremsleitung 2 herrschenden Bremsdruck beaufschlagt, wodurch das Auslassventil 8 in seine Betätigungsstellung umgeschaltet wird, in der die Radbremsleitung 3 mit der Rücklaufleitung 9 verbunden ist.

Bei der ABS-Steuerung wird durch wechselweises Öffnen und Schließen des Einlassventils 7 und des Auslassventils 8 der in der Radbremsleitung 3 herrschende und an der Radbremse 4 wirksame Bremsdruck derart moduliert, dass ein Blockieren des betreffenden Fahrzeugrades verhindert wird, und das Radfahrzeug brems- sowie lenkfähig bleibt.

In Fig. 1a ist die Ventilanordnung 6 gemäß Fig. 1 mit mittig geschnitten dargestellten Ein- und Auslassventilen 7, 8 abgebildet. Hierin ist gut zu erkennen, dass das Einlassventil 7 und das Auslassventil 8 vorliegend als Sitzventile ausgebildet sind. Das Einlassventil 7 weist eine nach axial innen stufenweise verengte Ventilbohrung 23 mit einem innenliegenden Ventilsitz 24 auf. In der Ventilbohrung 23 sind ein im Ruhezustand von einer Ventilfeder 25 in einer von dem Ventilsitz 24 abgehobenen Stellung gehaltener Sitzkolben 26 und ein Stellkolben 28 axialbeweglich geführt. Der Sitzkolben 26 weist an seinem dem Ventilsitz 24 zugewandten Ende einen Sitzabschnitt 27 mit reduziertem Durchmesser auf. Der Stellkolben 28 ist bezüglich des Ventilsitzes 24 axial außerhalb des Sitzkolbens 26 benachbart zu dem Steueranschluss 13 der betreffenden Steuerdruckleitung 18 angeordnet und steht über einen in einer Hülse 30 mittig geführten Stößel 29 mit dem Sitzkolben 26 in Stellverbindung. In die Ventilbohrung 23 münden axial innen neben dem Ventilsitz 24 die Hauptbremsleitung 2 und axial weiter außen neben dem Ventilsitz 24 die Radbremsleitung 3 radial ein.

Durch den genannten Anschluss der Hauptbremsleitung 2 an die Ventilbohrung 23 des Einlassventils 7 wird eine auf die Stellbewegung des Sitzkolbens 26 dämpfende Stellkraft erzeugt. Die endseitige Einschnürung des Sitzkolbens 26 bewirkt eine Vergrößerung des Schaltquerschnittes und damit des Volumendurchsatzes durch das Einlassventil 7.

Das Auslassventil 8 weist gemäß Fig. 1a eine beidseitig nach axial innen stufenweise verengte Ventilbohrung 31 mit einem axial innenliegenden Ventilsitz 32 auf. In der Ventilbohrung 31 sind axial einseitig ein im Ruhezustand von einer Ventilfeder 33 in einer auf dem Ventilsitz 32 aufliegenden Stellung gehaltener Sitzkolben 34 sowie axial gegenüberliegend ein Stellkolben 36 axialbeweglich geführt. Der Sitzkolben 34 weist an seinem dem Ventilsitz 32 zugewandten Ende einen Sitzabschnitt 35 mit reduziertem Durchmesser auf. Der Stellkolben 36 ist bezüglich des Ventilsitzes 32 axial gegenüberliegend zu dem Sitzkolben 34 benachbart zu dem Steueranschluss 16 der betreffenden Steuerdruckleitung 21 angeordnet und steht über einen Stößel 37 mit dem Sitzkolben 34 in Stellverbindung. In die Ventilbohrung 31 münden stellkolbenseitig axial neben dem Ventilsitz 32 die Rücklaufleitung 9 und sitzkolbenseitig axial neben dem Ventilsitz 32 die Radbremsleitung 3 radial ein. Auf der vom Ventilsitz 32 axial abgewandten Seite des Sitzkolbens 34 ist eine von der Radbremsleitung 3 abzweigende Steuerdruckleitung 38 in die Ventilbohrung 31 geführt.

Die endseitige Einschnürung des Sitzkolbens 34 bewirkt eine Vergrößerung des Schaltquerschnittes und damit des Volumendurchsatzes durch das Auslassventil 8. Durch die Zuführung des Bremsdruckes aus der Radbremsleitung 3 über die Steuerdruckleitung 38 an die durchmessergrößere äußere Stirnwand des Sitzkolbens 34 wird die bauartbedingt sitzseitig im öffnenden Sinn auf eine Ringfläche des Sitzkolbens 34 wirksame Druckkraft überkompensiert, so dass das Auslassventil 8 bei niedrigerem Bremsdruck in der Hauptbremsleitung 2 sicher geschlossen beziehungsweise geschlossen gehalten wird. Zur Druckentlastung und zur Abfuhr von Leckageöl führt eine Leckageleitung 39 jeweils im Kontaktbereich des Stellkolbens 28, 36 mit dem Stößel 29, 37 von der Ventilbohrung 23 des Einlassventils 7 über die Ventilbohrung 31 des Auslassventils 8 in die zum Sammelbehälter 10 führenden Rücklaufleitung 9.

Die in Fig. 1b mit mittig geschnittener Darstellung des Einlassventils 7 und des Auslassventils 8' abgebildete Ventilanordnung 6' unterscheidet sich von der entsprechenden Abbildung in Fig. 1a nur durch eine modifizierte Ausführung des Auslassventils 8'. Das Auslassventil 8' ist nun als ein so genanntes kaskadiertes Sitzventil ausgebildet, das eine beidseitig nach axial innen stufenweise verengte Ventilbohrung 41 mit einem axial innenliegenden ersten Ventilsitz 42 aufweist. In der Ventilbohrung 41 sind axial einseitig eine von einer ersten Ventilfeder 43 in öffnender Richtung belastete Sitzhülse 44 mit einem zweiten Ventilsitz 45 sowie dazu axial benachbarten Radialbohrungen, und axial gegenüberliegend ein Stellkolben 49 axialbeweglich geführt. Innerhalb der Sitzhülse 44 ist ein im Ruhezustand von einer zweiten Ventilfeder 46 in einer auf dem zweiten Ventilsitz 45 aufliegenden Stellung gehaltener und an der Sitzhülse 44 abgestützter Sitzkolben 47 axialbeweglich angeordnet.

Die Federsteifigkeit der zweiten Ventilfeder 46 ist größer als die Federsteifigkeit der ersten Ventilfeder 43, so dass die Sitzhülse 44 im unbetätigten Ruhezustand des Auslassventils 8' auf dem ersten Ventilsitz 42 aufliegt. Der Sitzkolben 47 weist an seinem dem zweiten Ventilsitz 45 zugewandten Ende einen Sitzabschnitt 48 mit reduziertem Durchmesser auf.

Der Stellkolben 49 ist bezüglich des ersten Ventilsitzes 42 axial gegenüberliegend zu der Sitzhülse 44 sowie benachbart zu dem Steueranschluss 16 der betreffenden Steuerdruckleitung 21 angeordnet und steht über einen Stößel 50 mit dem Sitzkolben 47 in Stellverbindung. Analog zu der ersten Ausführungsform des Auslassventils 8 gemäß Fig. 1a münden in die Ventilbohrung 41 axial stellkolbenseitig neben dem ersten Ventilsitz 42 die Rücklaufleitung 9 und axial sitzkolbenseitig neben dem ersten Ventilsitz 42 die Radbremsleitung 3 radial ein. Auch bei dieser Ausführung des Auslassventils 8' ist auf der axial von dem ersten Ventilsitz 42 abgewandten Seite des Sitzkolbens 47 eine von der Radbremsleitung 3 abzweigende Steuerdruckleitung 38 in die Ventilbohrung 41 geführt.

Durch die kaskadierte Ausführung des Sitzventils wird der Schaltquerschnitt vergrößert und damit ein erhöhter Volumendurchsatz des Auslassventils 8' erreicht. Die endseitige Einschnürung des Sitzkolbens 47 bewirkt eine zusätzliche Vergrößerung des Schaltquerschnittes und damit des Volumendurchsatzes des Auslassventils 8'. Durch die Zuführung des Bremsdruckes aus der Radbremsleitung 3 über die Steuerdruckleitung 38 an die durchmessergrößere axial äußere Stirnwand des Sitzkolbens 47 wird die bauartbedingt sitzseitig im öffnenden Sinn auf Ringflächen der Sitzhülse 44 und des Sitzkolbens 47 wirksame Druckkraft überkompensiert, so dass das Auslassventil 8' bei niedrigerem Bremsdruck in der Hauptbremsleitung 2 sicher geschlossen beziehungsweise geschlossen gehalten wird.

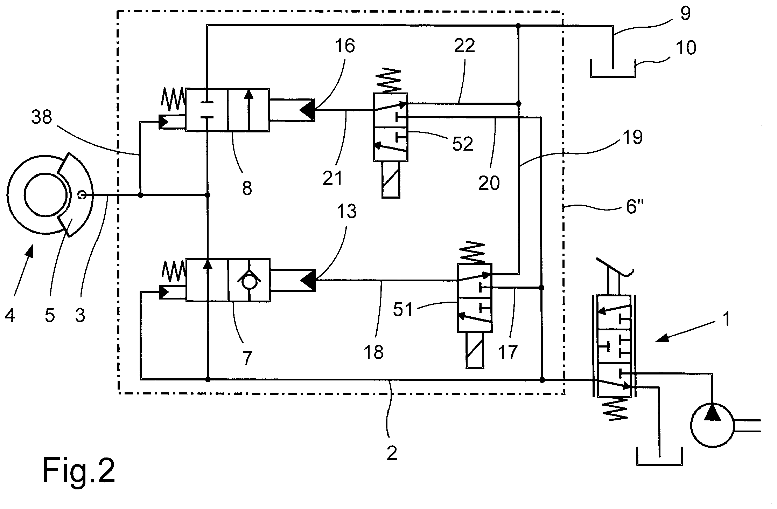

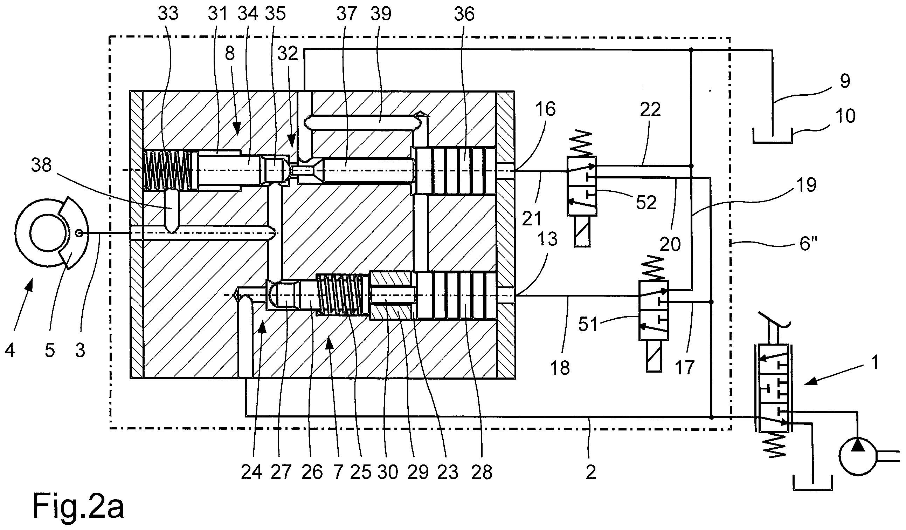

Bei gleicher Ausführung des Einlassventils 7 und des Auslassventils 8 unterscheidet sich die in Fig. 2 in schematischer Form und in Fig. 2a mit mittig geschnittener Darstellung der Ein- und Auslassventile 7, 8 abgebildete Ventilanordnung 6" von der Ventilanordnung 6 gemäß den Figuren 1 und 1a durch eine andere Ausführung der beiden Vorsteuerventile 51, 52, die nun als 3/2-Wege-Magnetschaltventile ausgebildet sind.

Das Vorsteuerventil 51 des Einlassventils 7 ist zwischen der von der Hauptbremsleitung 2 abzweigenden Hochdruckleitung 17, der zu dem Steueranschluss 13 des Einlassventils 7 führenden Steuerdruckleitung 18 und der in die Rücklaufleitung 9 führenden Niederdruckleitung 19 angeordnet. Im Ruhezustand, also im unbestromten Zustand der Magnetspule des Vorsteuerventils 51, ist die Steuerdruckleitung 18 gegenüber der Hochdruckleitung 17 abgesperrt und mit der Niederdruckleitung 19 verbunden. Im Betätigungszustand, also im bestromten Zustand der Magnetspule des Vorsteuerventils 51, ist die Steuerdruckleitung 18 mit der Hochdruckleitung 17 verbunden und gegenüber der Niederdruckleitung 19 abgesperrt. Somit wird der Steueranschluss 13 des Einlassventils 7 im unbetätigten Zustand des zugeordneten Vorsteuerventils 51 mit dem niedrigen Steuerdruck beziehungsweise mit dem Umgebungsdruck sowie im betätigten Zustand des Vorsteuerventils 51 mit dem in der Hauptbremsleitung 2 herrschenden Bremsdruck beaufschlagt, was der Funktionalität der beiden Vorsteuerventile 11, 12 des Einlassventils 7 gemäß den Figuren 1 und 1a entspricht.

Das Vorsteuerventil 52 des Auslassventils 8 ist zwischen der von der Hauptbremsleitung 2 abzweigenden Hochdruckleitung 20, der zu dem Steueranschluss 16 des Auslassventils 8 führenden Steuerdruckleitung 21 und der in die Rücklaufleitung 9 führenden Niederdruckleitung 22 angeordnet. Im Ruhezustand des Vorsteuerventils 52 ist die Steuerdruckleitung 21 gegenüber der Hochdruckleitung 20 abgesperrt und mit der Niederdruckleitung 22 verbunden. Im Betätigungszustand des Vorsteuerventils 52 ist die Steuerdruckleitung 21 mit der Hochdruckleitung 20 verbunden und gegenüber der Niederdruckleitung 22 abgesperrt. Somit wird der Steueranschluss 16 des Auslassventils 8 im unbetätigten Zustand des zugeordneten Vorsteuerventils 52 mit dem niedrigen Steuerdruck beziehungsweise Umgebungsdruck sowie im betätigten Zustand des Vorsteuerventils 52 mit dem in der Hauptbremsleitung 2 herrschenden Bremsdruck beaufschlagt, was der Funktionalität der beiden Vorsteuerventile 14, 15 des Auslassventils 8 gemäß den Figuren 1 und 1a entspricht.

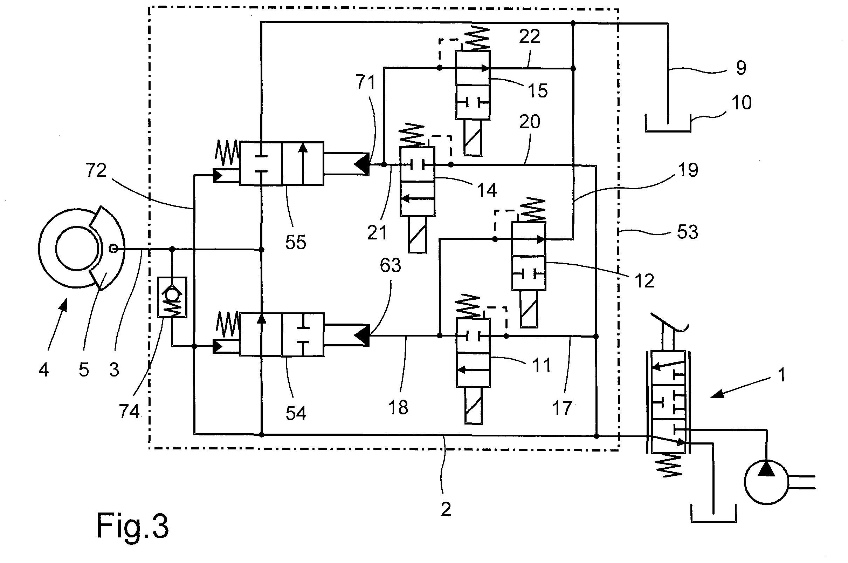

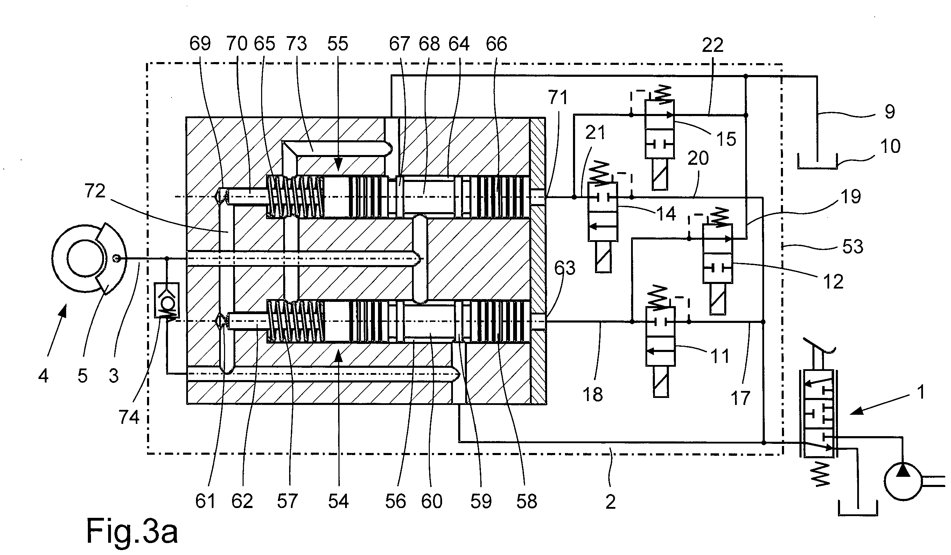

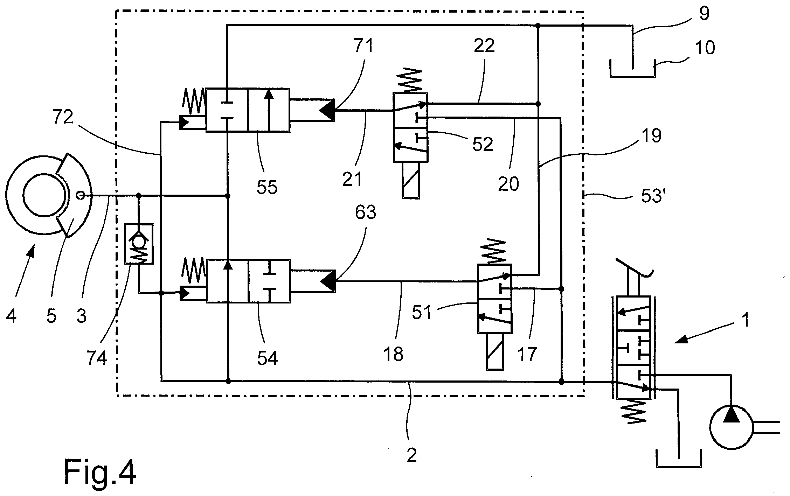

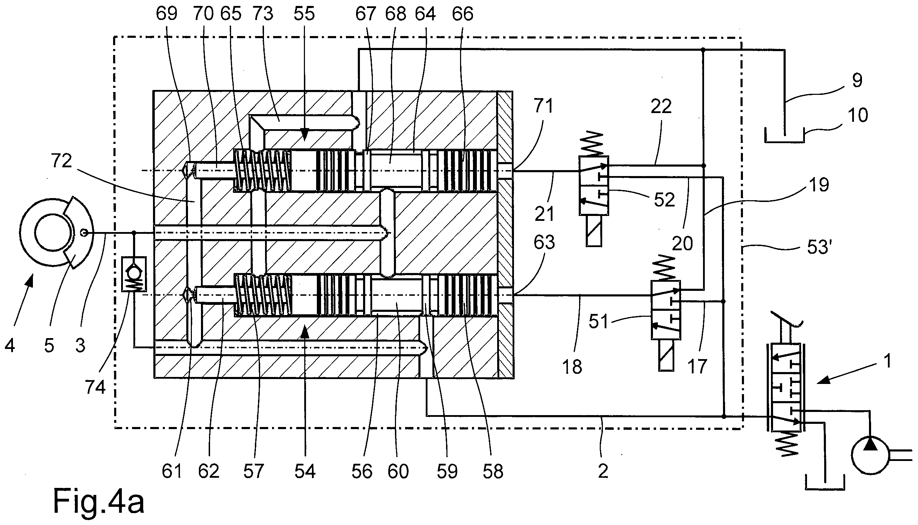

Die Figuren 3, 3a, 4 und 4a beschreiben alternative Ausführungen, welche nicht beansprucht sind und damit nur Stand der Technik bilden.

In den Figuren 3 und 3a ist ein Ausschnitt einer fremdkraftgestützten hydraulischen Bremsanlage eines Radfahrzeugs abgebildet, der die einer einzelnen Radbremse 4 zugeordnete Ventilanordnung 53 einer ABS-Steuerung umfasst. In Fig. 3 ist die Ventilanordnung 53 in rein schematischer Form abgebildet, in Fig. 3a mit mittig geschnitten dargestellten Ein- und Auslassventilen 54, 55. Während die Ausbildung und Anordnung der Vorsteuerventile 11, 12; 14, 15 der Ventilanordnung gemäß den Figuren 1 und 1a entspricht, sind das Einlassventil 54 und das Auslassventil 55 bei prinzipiell gleicher Funktionsweise im Unterschied dazu nun als Schieberventile ausgebildet.

Das Einlassventil 54 weist eine zylindrische Ventilbohrung 56 auf, in der ein im Ruhezustand von einer Ventilfeder 57 in einer offenen Schaltposition gehaltener Steuerkolben 58 angeordnet ist. Der Steuerkolben 58 weist einen ringförmigen Steuersteg 59 und axial dazu benachbart eine ringförmigen Verbindungsnut 60 auf. In die Ventilbohrung 56 münden im Bereich des Steuersteges 59 die Hauptbremsleitung 2 und im Bereich der Verbindungsnut 60 die Radbremsleitung 3 radial ein. Auf der von der Ventilfeder 57 axial abgewandten Außenseite der Ventilbohrung 56 ist der Steueranschluss 63 der zugeordneten Steuerdruckleitung 18 angeordnet. Bei drucklos geschaltetem Steueranschluss 63 befindet sich der Steuersteg 59 des Steuerkolbens 58 mittig über der Einmündung der Hauptbremsleitung 2, so dass die Radbremsleitung 3 dann über die Verbindungsnut 60 des Steuerkolbens 58 mit der Hauptbremsleitung 2 verbunden ist. Bei der Beaufschlagung des Steueranschlusses 63 mit dem hohen Steuerdruck wird der Steuerkolben 58 gegen die Rückstellkraft der Ventilfeder 57 und einer hydraulischen Gegenkraft nach axial innen gedrückt, wodurch der Steuersteg 59 des Steuerkolbens 58 ventilfederseitig am Rand der Einmündung der Hauptbremsleitung 2 liegt, und die Radbremsleitung 2 somit gegenüber der Hauptbremsleitung 2 abgesperrt ist.

In ähnlicher Weise weist das Auslassventil 55 eine zylindrische Ventilbohrung 64 auf, in der ein im Ruhezustand von einer Ventilfeder 65 jedoch in einer geschlossenen Schaltposition gehaltener Steuerkolben 66 angeordnet ist. Auch dieser Steuerkolben 66 weist einen ringförmigen Steuersteg 67 und axial benachbart eine ringförmige Verbindungsnut 68 auf. In die Ventilbohrung 64 münden im Bereich des Steuersteges 67 die Rücklaufleitung 9 und im Bereich der Verbindungsnut 68 die Radbremsleitung 3 radial ein. Auf der von der Ventilfeder 65 axial abgewandten Außenseite der Ventilbohrung 64 ist der Steueranschluss 71 der betreffenden Steuerdruckleitung 21 angeordnet.

Bei drucklos geschaltetem Steueranschluss 71 des Auslassventils 55 befindet sich der Steuersteg 67 des Steuerkolbens 66 steuerdruckseitig am Außenrand der Einmündung der Rücklaufleitung 9, so dass die Radbremsleitung 3 dann gegenüber der Rücklaufleitung abgesperrt ist. Bei der Beaufschlagung des Steueranschlusses 71 mit dem hohen Steuerdruck wird der Steuerkolben 66 gegen die Rückstellkraft der Ventilfeder 65 und einer hydraulischen Gegenkraft nach axial innen gedrückt, wodurch der Steuersteg 67 des Steuerkolbens 66 mittig über der Einmündung der Rücklaufleitung 9 liegt, und die Radbremsleitung 2 somit mit der Rücklaufleitung 9 verbunden ist.

Zur Erzeugung einer begrenzten hydraulischen Gegenkraft, die wie die betreffende Ventilfeder 57, 65 entgegen der über den zugeordneten Steueranschluss 63, 71 eingesteuerten Stellkraft auf den jeweiligen Steuerkolben 58, 66 einwirkt, weisen die Ventilbohrungen 56, 64 des Einlassventils 54 und des Auslassventils 55 jeweils eine koaxiale Erweiterungsbohrung 61, 69 mit einem im Vergleich zu den Ventilbohrungen 56, 64 verringerten Durchmesser auf, in denen jeweils ein mit dem Steuerkolben 58, 66 in Kontakt stehender oder in Kontakt bringbarer zylindrischer Stift 62, 70 axialbeweglich geführt ist, und in die endseitig eine von der Hauptbremsleitung 2 abzweigende Steuerdruckleitung 72 geführt ist.

Zur Druckentlastung und zur Abfuhr von Leckageöl führt eine Leckageleitung 73 jeweils im Bereich der Ventilfeder 57, 65 von der Ventilbohrung 56 des Einlassventils 54 über die Ventilbohrung 64 des Auslassventils 55 in die Rücklaufleitung 9.

Um bei gelöstem Bremspedal und geschlossenen Ein- und Auslassventilen 54, 55 einen schnellen Druckabbau in der Radbremsleitung 3 zu ermöglichen, ist parallel zu dem Einlassventil 54 zwischen der Radbremsleitung und 3 der Hauptbremsleitung 2 ein in Richtung zu der Hauptbremsleitung 2 öffnendes Rückschlagventil 74 angeordnet.

Bei gleicher Ausführung des Einlassventils 54 und des Auslassventils 55 unterscheidet sich die in Fig. 4 in rein schematischer Form und in Fig. 4a mit mittig geschnittener Darstellung der Ein- und Auslassventile 54, 55 abgebildete Ventilanordnung 53' von der Ventilanordnung 53 gemäß den Figuren 3 und 3a nur dadurch, dass analog zu der Ventilanordnung 6" gemäß den Figuren 2 und 2a anstelle von jeweils zwei als 2/2-Wege-Magnetschaltventile ausgebildeten Vorsteuerventilen 11, 12; 14, 15 nun bei prinzipiell gleicher Funktionsweise jeweils ein als 3/2-Wege-Magnetschaltventil ausgebildetes Vorsteuerventil 51, 52 verwendet wird.

### Bezugszeichenliste (Bestandteil der Beschreibung)

- 1: Bremsventil
- 2: Hauptbremsleitung
- 3: Radbremsleitung
- 4: Radbremse
- 5: Betätigungseinheit, Bremssattel
- 6, 6', 6": Ventilanordnung
- 7: Einlassventil, Sitzventil
- 8: Auslassventil, Sitzventil
- 8': Auslassventil, kaskadiertes Sitzventil
- 9: Rücklaufleitung
- 10: Sammelbehälter
- 11: Erstes Vorsteuerventil, 2/2-Wege-Magnetschaltventil
- 12: Zweites Vorsteuerventil, 2/2-Wege-Magnetschaltventil
- 13: Steueranschluss
- 14: Erstes Vorsteuerventil, 2/2-Wege-Magnetschaltventil
- 15: Zweites Vorsteuerventil, 2/2-Wege-Magnetschaltventil
- 16: Steueranschluss
- 17: Hochdruckleitung
- 18: Steuerdruckleitung
- 19: Niederdruckleitung
- 20: Hochdruckleitung
- 21: Steuerdruckleitung
- 22: Niederdruckleitung
- 23: Ventilbohrung
- 24: Ventilsitz
- 25: Ventilfeder
- 26: Sitzkolben
- 27: Sitzabschnitt
- 28: Stellkolben
- 29: Stößel
- 30: Hülse
- 31: Ventilbohrung
- 32: Ventilsitz
- 33: Ventilfeder
- 34: Sitzkolben
- 35: Sitzabschnitt
- 36: Stellkolben
- 37: Stößel
- 38: Steuerdruckleitung
- 39: Leckageleitung
- 41: Ventilbohrung
- 42: Erster Ventilsitz
- 43: Erste Ventilfeder
- 44: Sitzhülse
- 45: Zweiter Ventilsitz
- 46: Zweite Ventilfeder
- 47: Sitzkolben
- 48: Sitzabschnitt
- 49: Stellkolben
- 50: Stößel
- 51: Vorsteuerventil, 3/2-Wege-Magnetschaltventil
- 52: Vorsteuerventil, 3/2-Wege-Magnetschaltventil
- 53, 53': Ventilanordnung
- 54: Einlassventil, Schieberventil
- 55: Auslassventil, Schieberventil
- 56: Ventilbohrung
- 57: Ventilfeder
- 58: Steuerkolben
- 59: Steuersteg
- 60: Verbindungsnut
- 61: Erweiterungsbohrung
- 62: Stift
- 63: Steueranschluss
- 64: Ventilbohrung
- 65: Ventilfeder
- 66: Steuerkolben
- 67: Steuersteg
- 68: Verbindungsnut
- 69: Erweiterungsbohrung
- 70: Stift
- 71: Steueranschluss
- 72: Steuerdruckleitung
- 73: Leckageleitung
- 74: Rückschlagventil

## Patentansprüche

1. Fremdkraftgestützte hydraulische Bremsanlage eines Radfahrzeugs, mit einer Hauptbremsleitung (2), in die mittels eines über ein Bremspedal betätigbaren Bremsventils (1) ein Soll-Bremsdruck einsteuerbar ist, und von der mehrere jeweils zu einer Betätigungseinheit (5) einer Radbremse (4) führende Radbremsleitungen (3) abzweigen, sowie mit einer Ventilanordnung (6, 6', 6") einer ABS-Steuerung, die jeweils ein zwischen der Hauptbremsleitung (2) und einer der Radbremsleitungen (3) angeordnetes Einlassventil (7) sowie ein zwischen der betreffenden Radbremsleitung (3) und einer drucklosen Rücklaufleitung (9) angeordnetes Auslassventil (8, 8') aufweist, wobei das Einlassventil (7) und das Auslassventil (8, 8') als druckgesteuerte 2/2-Wege-Schaltventile mit entsprechend großen Schaltquerschnitten ausgebildet sind, wobei dem Einlassventil (7) und dem Auslassventil (8, 8') jeweils mindestens ein als Magnetschaltventil ausgebildetes Vorsteuerventil (11, 12, 14, 15; 51, 52) zugeordnet ist, mittels dem ein Steueranschluss (13, 16) des betreffenden Ein- oder Auslassventils (7, 8, 8') zur Umschaltung wechselweise mit einem niedrigen oder hohen Steuerdruck beaufschlagbar ist, wobei das Einlassventil (7) und das Auslassventil (8, 8') als ein Sitzventil ausgebildet ist, das zumindest einen Anschluss für die Radbremsleitung (3), den Steueranschluss (13; 16) für eine betreffende Steuerdruckleitung (18; 21) sowie einen Anschluss für die Hauptbremsleitung (2) oder für die Rücklaufleitung (9) aufweist, **dadurch gekennzeichnet, dass** das Einlassventil (7) eine nach innen stufenweise verengte Ventilbohrung (23) mit einem innenliegenden Ventilsitz (24) aufweist, in der ein im Ruhezustand von einer Ventilfeder (25) in einer von dem Ventilsitz (24) abgehobenen Stellung gehaltener Sitzkolben (26) und axial außen ein mit dem Sitzkolben (26) in Stellverbindung stehender Stellkolben (28) angeordnet sind, wobei axial innen in die Ventilbohrung (23) neben dem Ventilsitz (24) die Hauptbremsleitung (2) radial einmündet, wobei axial außen in die Ventilbohrung (23) neben dem Ventilsitz (24) die Radbremsleitung (3) radial einmündet, und wobei an der Ventilbohrung (23) axial außen der Steueranschluss (13) für die zugeordnete Steuerdruckleitung (18) angeordnet ist.

2. Hydraulische Bremsanlage nach Anspruch 1, **dadurch gekennzeichnet, dass** dem Einlassventil (7) und/oder dem Auslassventil (8, 8') jeweils zwei als 2/2-Wege-Magnetschaltventile ausgebildete Vorsteuerventile (11, 12; 14, 15) zugeordnet sind, von denen das erste Vorsteuerventil (11; 14) zwischen einer von der Hauptbremsleitung (2) abzweigenden Hochdruckleitung (17; 20) und der zu dem betreffenden Steueranschluss (13, 63; 16) führenden Steuerdruckleitung (18; 21) angeordnet ist, die im unbestromten Zustand des ersten Vorsteuerventils (11; 14) gegeneinander abgesperrt und im bestromten Zustand des ersten Vorsteuerventils (11; 14) miteinander verbunden sind, und von denen das zweite Vorsteuerventil (12; 15) zwischen der Steuerdruckleitung (18; 21) und einer zu der Rücklaufleitung (9) führenden Niederdruckleitung (19; 22) angeordnet ist,
die im unbestromten Zustand des zweiten Vorsteuerventils (12; 15) miteinander verbunden und im bestromten Zustand des zweiten Vorsteuerventils (12; 15) gegeneinander abgesperrt sind.

3. Hydraulische Bremsanlage nach Anspruch 1, **dadurch gekennzeichnet, dass** dem Einlassventil (7) und/oder dem Auslassventil (8, 8') jeweils ein als 3/2-Wege-Magnetschaltventil ausgebildetes Vorsteuerventil (51; 52) zugeordnet ist, das zwischen einer von der Hauptbremsleitung (2) abzweigenden Hochdruckleitung (17; 20), der zu dem betreffenden Steueranschluss (13, 63; 16) führenden Steuerdruckleitung (18; 21) und einer zu der Rücklaufleitung (9) führenden Niederdruckleitung (19; 22) angeordnet ist, wobei die Steuerdruckleitung (18; 21) im unbestromten Zustand des betreffenden Vorsteuerventils (51; 52) mit der Niederdruckleitung (19; 22) verbunden und gegenüber der Hochdruckleitung (17; 20) abgesperrt ist, und wobei die Steuerdruckleitung (18; 21) im bestromten Zustand des betreffenden Vorsteuerventils (51; 52) mit der Hochdruckleitung (17; 20) verbunden und gegenüber der Niederdruckleitung (19; 22) abgesperrt ist.

4. Hydraulische Bremsanlage nach Anspruch 1, **dadurch gekennzeichnet, dass** der Sitzkolben (26) des Einlassventils (7) an seinem dem Ventilsitz (24) zugewandten Ende einen Sitzabschnitt (27) mit reduziertem Durchmesser aufweist.

5. Hydraulische Bremsanlage nach wenigstens einem der Ansprüche 1 oder 4, **dadurch gekennzeichnet, dass** das Auslassventil (8) eine beidseitig nach axial innen stufenweise verengte Ventilbohrung (31) mit einem axial innenliegenden Ventilsitz (32) aufweist, in der axial einseitig ein im Ruhezustand von einer Ventilfeder (33) in einer auf dem Ventilsitz (32) aufliegenden Stellung gehaltener Sitzkolben (34) sowie und axial gegenüberliegend ein mit dem Sitzkolben (34) in Stellverbindung stehender Stellkolben (36) angeordnet sind, wobei in die Ventilbohrung (31) axial stellkolbenseitig neben dem Ventilsitz (32) die Rücklaufleitung (9) radial einmündet, wobei in die Ventilbohrung (31) axial sitzkolbenseitig neben dem Ventilsitz (32) die Radbremsleitung (3) radial einmündet, und wobei in die Ventilbohrung (31) stellkolbenseitig axial außen der Steueranschluss (16) für die zugeordnete Steuerdruckleitung (21) angeordnet ist.

6. Hydraulische Bremsanlage nach wenigstens einem der Ansprüche 1 oder 4, **dadurch gekennzeichnet, dass** das Auslassventil (8') als ein kaskadiertes Sitzventil ausgebildet ist, das eine beidseitig nach axial innen stufenweise verengte Ventilbohrung (41) mit einem axial innenliegenden ersten Ventilsitz (42) aufweist, wobei in dieser Ventilbohrung (41) axial einseitig eine von einer ersten Ventilfeder (43) in öffnender Richtung belastete Sitzhülse (44) mit einem zweiten Ventilsitz (45) sowie dazu axial benachbarten Radialbohrungen angeordnet sind, wobei radial innerhalb der Sitzhülse (44) ein im Ruhezustand von einer zweiten Ventilfeder (46) in einer auf dem zweiten Ventilsitz (45) aufliegenden Stellung gehaltener sowie an der Sitzhülse (44) abgestützter Sitzkolben (47) angeordnet ist, und, axial gegenüberliegend, ein mit dem Sitzkolben (47) in Stellverbindung stehender Stellkolben (49) angeordnet ist, wobei in diese Ventilbohrung (41) axial stellkolbenseitig neben dem ersten Ventilsitz (42) die Rücklaufleitung (9) radial einmündet, wobei in diese Ventilbohrung (41) axial sitzhülsenseitig neben dem ersten Ventilsitz (42) die Radbremsleitung (3) radial einmündet, und an der stellkolbenseitig axial außen der Steueranschluss (16) für die zugeordnete Steuerdruckleitung (21) angeordnet ist.

7. Hydraulische Bremsanlage nach Anspruch 5 oder 6, **dadurch gekennzeichnet, dass** der Sitzkolben (34, 47) des Auslassventils (8, 8') an seinem dem Ventilsitz (32) beziehungsweise dem zweiten Ventilsitz (45) zugewandten Ende einen Sitzabschnitt (35, 48) mit reduziertem Durchmesser aufweist, und dass auf der axial dem Ventilsitz (32, 45) abgewandten Seite des Sitzkolbens (34, 47) eine von der Radbremsleitung (3) abzweigende Steuerdruckleitung (38) in die Ventilbohrung (31, 41) geführt ist.

8. Hydraulische Bremsanlage nach wenigstens einem der Ansprüche 1 bis 7, **dadurch gekennzeichnet, dass** das Einlassventil (7), das Auslassventil (8, 8') und die zugeordneten Vorsteuerventile (11, 12, 14, 15; 51, 52) der einer Radbremse (4) zugeordneten Ventilanordnung (6, 6', 6") der ABS-Steuerung in einem Ventilmodul zusammengefasst sind.

## Claims

1. Power-assisted hydraulic braking system of a wheeled vehicle, with a main brake line (2) into which a setpoint brake pressure can be introduced via a brake valve (1) actuated by means of a brake pedal, and from which a plurality of wheel brake lines (3) branch off, each leading to an actuating unit (5) of a wheel brake (4), and with a valve arrangement (6, 6', 6'') of an ABS controller, comprising an inlet valve (7) disposed between the main brake line (2) and one of the wheel brake lines (3) and an outlet valve (8, 8') disposed between the relevant wheel brake line (3) and a pressureless return line (9), wherein the inlet valve (7) and the outlet valve (8, 8') are embodied as pressure-controlled 2/2-way switching valves with suitably sized switching cross-sections, wherein at least one pilot control valve (11, 12, 14, 15; 51, 52) embodied as a solenoid switching valve is associated with each of the inlet valve (7) and the outlet valve (8, 8'), by means of which a control connection (13, 16) of the relevant inlet or outlet valve (7, 8, 8') can be alternately subjected to a low or high control pressure to change over, wherein the inlet valve (7) and the outlet valve (8, 8') are embodied as a poppet valve which comprises at least one connection for the wheel brake line (3), the control connection (13; 16) for a relevant control pressure line (18; 21) and a connection for the main brake line (2) or for the return line (9), **characterized in that** the inlet valve (7) comprises a valve bore (23) narrowing inwards in stages with an inner-lying valve seat (24), in which are disposed a seat piston (26) that is held in a position raised from the valve seat (24) by a valve spring (25) in the rest state and axially on the outside a control piston (28) that is connected to the seat piston (26), wherein the main brake line (2) opens radially into the valve bore (23) axially inwards next to the valve seat (24), wherein the wheel brake line (3) opens radially into the valve bore (23) axially on the outside next to the valve seat (24), and wherein the control connection (13) for the associated control pressure line (18) is disposed axially on the outside on the valve bore (23).

2. Hydraulic braking system according to Claim 1, **characterized in that** two pilot control valves (11, 12; 14, 15) embodied as 2/2-way solenoid switching valves are associated with each of the inlet valve (7) and/or the outlet valve (8, 8'), of which the first pilot control valve (11; 14) is disposed between a high-pressure line (17; 20) branching off from the main brake line (2) and the control pressure line (18; 21) leading to the relevant control connection (13, 63; 16), which with the first pilot control valve (11; 14) in the deenergized state are shut off from each other and with the first pilot control valve (11; 14) in the energized state are connected to each other, and of which the second pilot control valve (12; 15) is disposed between the control pressure line (18; 21) and a low-pressure line (19; 22) leading to the return line (9), which are connected to each other with the second pilot control valve (12; 15) in the deenergized state and which are shut off from each other with the second pilot control valve (12; 15) in the energized state.

3. Hydraulic braking system according to Claim 1, **characterized in that** a pilot control valve (51; 52) embodied as a 3/2-way solenoid switching valve is associated with each of the inlet valve (7) and/or the outlet valve (8, 8'), which is disposed between a high-pressure line (17; 20) branching off from the main brake line (2), the control pressure line (18; 21) leading to the relevant control connection (13, 63; 16) and a low-pressure line (19; 22) leading to the return line (9), wherein with the relevant pilot control valve (51; 52) in the deenergized state, the control pressure line (18; 21) is connected to the low-pressure line (19; 22) and is shut off from the high-pressure line (17; 20), and wherein with the relevant pilot control valve (51; 52) in the energized state, the control pressure line (18; 21) is connected to the high-pressure line (17; 20) and is shut off from the low-pressure line (19; 22).

4. Hydraulic braking system according to Claim 1, **characterized in that** the seat piston (26) of the inlet valve (7) comprises a seat section (27) with a reduced diameter at the end thereof facing towards the valve seat (24).

5. Hydraulic braking system according to at least one of Claims 1 or 4, **characterized in that** the outlet valve (8) comprises a valve bore (31) narrowing axially inwards in stages on both sides with an axially inner-lying valve seat (32), in which are disposed axially on one side a seat piston (34) that is held in a position in contact with the valve seat (32) by a valve spring (33) in the rest state, and axially opposite a control piston (36) connected to the seat piston (34), wherein the return line (9) opens radially into the valve bore (31) axially on the control piston side next to the valve seat (32), wherein the wheel brake line (3) opens radially into the valve bore (31) axially on the seat piston side next to the valve seat (32), and wherein the control connection (16) for the associated control pressure line (21) is disposed in the valve bore (31) axially on the outside on the control piston side.

6. Hydraulic braking system according to at least one of Claims 1 or 4, **characterized in that** the outlet valve (8') is embodied as a cascaded poppet valve comprising a valve bore (41) narrowing axially inwards in stages on both sides with an axially inner-lying first valve seat (42), wherein in said valve bore (41) are disposed a seat sleeve (44) with a second valve seat (45) loaded by a first valve spring (43) in the opening direction axially on one side, and radial bores axially adjacent thereto, wherein radially within the seat sleeve (44) is disposed a seat piston (47) that is held in the rest state by a second valve spring (46) in a position in contact with the second valve seat (45) and supported on the seat sleeve (44), and a control piston (49) that is connected to the seat piston (47) is disposed axially opposite, wherein the return line (9) opens radially into said valve bore (41) axially on the control piston side next to the first valve seat (42), wherein the wheel brake line (3) opens radially into said valve bore (41) axially on the seat sleeve side next to the first valve seat (42), and the control connection (16) for the associated control pressure line (21) is disposed axially on the outside on the control piston side.

7. Hydraulic braking system according to Claim 5 or 6, **characterized in that** the seat piston (34, 47) of the outlet valve (8, 8') comprises a seat section (35, 48) with a reduced diameter at the end thereof facing towards the valve seat (32) or the second valve seat (45), and that a control pressure line (38) branching off from the wheel brake line (3) is fed into the valve bore (31, 41) on the side of the seat piston (34, 47) axially facing away from the valve seat (32, 45).

8. Hydraulic braking system according to at least one of Claims 1 to 7, **characterized in that** the inlet valve (7), the outlet valve (8, 8') and the associated pilot control valves (11, 12, 14, 15; 51, 52) of a valve arrangement (6, 6', 6'') of the ABS controller associated with a wheel brake (4) are combined within a valve module.

## Revendications

1. Système de freinage hydraulique assisté pour un véhicule sur roues, comprenant une conduite de frein principale (2) dans laquelle peut être injectée une pression de freinage de consigne au moyen d'une soupape de freinage (1) actionnable par le biais d'une pédale de frein, et de laquelle partent plusieurs conduites de freins de roues (3) conduisant chacune vers une unité d'actionnement (5) d'un frein de roue (4), et comprenant un système de soupapes (6, 6', 6") d'une commande ABS, qui présente à chaque fois une soupape d'entrée (7) disposée entre la conduite de frein principale (2) et l'une des conduites de freins de roues (3) ainsi qu'une soupape de sortie (8, 8') disposée entre la conduite de frein de roue concernée (3) et une conduite de retour sans pression (9), la soupape d'entrée (7) et la soupape de sortie (8, 8') étant réalisées sous forme de soupapes de commutation à 2/2 voies commandées en pression avec des sections transversales de commutation de tailles correspondantes, à chaque fois au moins une soupape pilote (11, 12, 14, 15 ; 51, 52) réalisée sous forme de soupape de commutation magnétique, au moyen de laquelle un raccord de commande (13, 16) de la soupape d'entrée ou de sortie concernée (7, 8, 8') peut être sollicité pour la commutation en alternance avec une pression de commande basse ou élevée, étant associée à la soupape d'entrée (7) et à la soupape de sortie (8, 8'), la soupape d'entrée (7) et la soupape de sortie (8, 8') étant réalisées sous forme de soupape à siège qui présente au moins un raccord pour la conduite de frein de roue (3), le raccord de commande (13 ; 16) pour une conduite de pression de commande concernée (18 ; 21) ainsi qu'un raccord pour la conduite de frein principale (2) ou pour la conduite de retour (9), **caractérisé en ce que** la soupape d'entrée (7) présente un alésage de soupape (23) rétréci de manière échelonnée vers l'intérieur avec un siège de soupape (24) situé à l'intérieur, dans lequel alésage de soupape sont disposés un piston de siège (26) retenu dans l'état de repos par un ressort de soupape (25) dans une position soulevée par rapport au siège de soupape (24) et, axialement à l'extérieur, un piston de réglage (28) en liaison de réglage avec le piston de siège (26), la conduite de frein principale (2) débouchant radialement, axialement à l'intérieur dans l'alésage de soupape (23) à côté du siège de soupape (24), la conduite de frein de roue (3) débouchant radialement, axialement à l'extérieur dans l'alésage de soupape (23) à côté du siège de soupape (24), et le raccord de commande (13) pour la conduite de pression de commande associée (18) étant disposé axialement à l'extérieur au niveau de l'alésage de soupape (23).

2. Système de freinage hydraulique selon la revendication 1, **caractérisé en ce qu'**à chaque fois deux soupapes pilotes (11, 12 ; 14, 15) réalisées sous forme de soupape de commutation magnétique à 2/2 voies sont associées à la soupape d'entrée (7) et/ou à la soupape de sortie (8, 8'), dont la première soupape pilote (11 ; 14) est disposée entre une conduite haute pression (17 ; 20) partant de la conduite de frein principale (2) et la conduite de pression de commande (18 ; 21) conduisant au raccord de commande concerné (13, 63 ; 16), lesquelles sont bloquées l'une par rapport à l'autre dans l'état non alimenté en courant de la première soupape pilote (11 ; 14) et sont connectées l'une à l'autre dans l'état alimenté en courant de la première soupape pilote (11 ; 14), et dont la deuxième soupape pilote (12 ; 15) est disposée entre la conduite de pression de commande (18 ; 21) et une conduite basse pression (19 ; 22) conduisant à la conduite de retour (9), lesquelles sont connectées l'une à l'autre dans l'état non alimenté en courant de la deuxième soupape pilote (12 ; 15) et sont bloquées l'une par rapport à l'autre dans l'état alimenté en courant de la deuxième soupape pilote (12 ; 15).

3. Système de freinage hydraulique selon la revendication 1, **caractérisé en ce qu'**à chaque fois une soupape pilote (51 ; 52) réalisée sous forme de soupape de commutation magnétique à 3/2 voies est associée à la soupape d'entrée (7) et/ou à la soupape de sortie (8, 8'), laquelle soupape pilote est disposée entre une conduite haute pression (17 ; 20) partant de la conduite de frein principale (2), la conduite de pression de commande (18 ; 21) conduisant au raccord de commande concerné (13, 63 ; 16) et une conduite basse pression (19 ; 22) conduisant à la conduite de retour (9), la conduite de pression de commande (18 ; 21), dans l'état non alimenté en courant de la soupape pilote concernée (51 ; 52), étant connectée à la conduite basse pression (19 ; 22) et étant bloquée par rapport à la conduite haute pression (17 ; 20), et la conduite de pression de commande (18 ; 21), dans l'état alimenté en courant de la soupape pilote concernée (51 ; 52), étant connectée à la conduite haute pression (17 ; 20) et étant bloquée par rapport à la conduite basse pression (19 ; 22).

4. Système de freinage hydraulique selon la revendication 1, **caractérisé en ce que** le piston de siège (26) de la soupape d'entrée (7) présente, au niveau de son extrémité tournée vers le siège de soupape (24), une portion de siège (27) de diamètre réduit.

5. Système de freinage hydraulique selon au moins l'une quelconque des revendications 1 et 4, **caractérisé en ce que** la soupape de sortie (8) présente un alésage de soupape (31) rétréci de manière échelonnée axialement vers l'intérieur avec un siège de soupape (32) situé axialement à l'intérieur, dans lequel alésage de soupape sont disposés axialement d'un côté un piston de siège (34) retenu dans l'état de repos par un ressort de soupape (33) dans une position s'appliquant sur le siège de soupape (32) et, axialement à l'opposé, un piston de réglage (36) en liaison de réglage avec le piston de siège (34), la conduite de retour (9) débouchant radialement dans l'alésage de soupape (31) axialement du côté du piston de réglage à côté du siège de soupape (32), la conduite de frein de roue (3) débouchant radialement dans l'alésage de soupape (31) axialement du côté du piston de siège à côté du siège de soupape (32), et le raccord de commande (16) pour la conduite de pression de commande associée (21) étant disposé dans l'alésage de soupape (31) du côté du piston de réglage axialement à l'extérieur.

6. Système de freinage hydraulique selon au moins l'une quelconque des revendications 1 et 4, **caractérisé en ce que** la soupape de sortie (8') est réalisée sous forme de soupape à siège en cascade, qui présente un alésage de soupape (41) rétréci de manière échelonnée axialement vers l'intérieur des deux côtés avec un premier siège de soupape situé axialement à l'intérieur (42), une douille de siège (44) sollicitée dans la direction d'ouverture par un premier ressort de soupape (43), avec un deuxième siège de soupape (45) ainsi que des alésages radiaux axialement adjacents à celui-ci étant disposés axialement d'un côté dans cet alésage de soupape (41), un piston de siège (47) retenu dans l'état de repos par un deuxième ressort de soupape (46) dans une position reposant sur le deuxième siège de soupape (45) et supporté sur la douille de siège (44) étant disposé radialement à l'intérieur de la douille de siège (44), et, axialement à l'opposé, étant disposé un piston de réglage (49) en liaison de réglage avec le piston de siège (47), la conduite de retour (9) débouchant radialement dans cet alésage de soupape (41) axialement du côté du piston de réglage à côté du premier siège de soupape (42), la conduite de frein de roue (3) débouchant radialement dans cet alésage de soupape (41) axialement du côté de la douille de siège à côté du premier siège de soupape (42), et le raccord de commande (16) pour la conduite de pression de commande associée (21) étant disposé axialement à l'extérieur du côté du piston de réglage.

7. Système de freinage hydraulique selon la revendication 5 ou 6, **caractérisé en ce que** le piston de siège (34, 47) de la soupape de sortie (8, 8') présente, au niveau de son extrémité tournée vers le siège de soupape (32) ou vers le deuxième siège de soupape (45), une portion de siège (35, 48) de diamètre réduit, et **en ce qu'**une conduite de pression de commande (38) partant de la conduite de frein de roue (3) est guidée dans l'alésage de soupape (31, 41) du côté du piston de siège (34, 47) opposé axialement au siège de soupape (32, 45).

8. Système de freinage hydraulique selon au moins l'une quelconque des revendications 1 à 7, **caractérisé en ce que** la soupape d'entrée (7), la soupape de sortie (8, 8') et les soupapes pilotes associées (11, 12, 14, 15 ; 51, 52) du système de soupapes (6, 6', 6'') de la commande ABS associé à un frein de roue (4), sont rassemblées dans un module de soupape.
